(19) Europäisches Patentamt

European Patent Office

Office européen des brevets

(11) Publication number: **0 130 505**
A1

(12) **EUROPEAN PATENT APPLICATION**

(21) Application number: **84107199.6**

(22) Date of filing: **22.06.84**

(51) Int. Cl.⁴: **H 01 M 6/14,** H 01 M 4/40

(30) Priority: **24.06.83 US 506988**

(43) Date of publication of application: **09.01.85**
Bulletin 85/2

(84) Designated Contracting States: **DE FR GB**

(71) Applicant: **RAYOVAC Corporation, 101 East Washington Avenue, Madison Wisconsin 53703 (US)**

(72) Inventor: **Fleischer, Niles Aaron, 12 Pinkster Street Apt. 2B, Rehovot 76308 (IL)**

(74) Representative: **Wuesthoff, Franz, Dr.-Ing. et al, Patentanwälte Wuesthoff -v. Pechmann-Behrens-Goetz Schweigerstrasse 2, D-8000 München 90 (DE)**

(54) **Minimization of voltage delay in Li-SOCl2 cells.**

(57) Passivation of lithium anodes in contact with thionyl chloride cathode/electrolytes is reduced by adding to the electrolytes a substance from the group of alkyl-20-cyanoacrylates and acrylic and substituted acrylic ester polymers.

EP 0 130 505 A1

Patentanwälte
Wuesthoff-v.Pechmann-
Behrens-Goetz
Schweigerstraße 2
8000 München 90

-1-

RAYOVAC CORPORATION

EP-58 382

## MINIMIZATION OF VOLTAGE DELAY IN Li-SOCl$_2$ CELLS

The present invention is directed to a method for reducing voltage delay encountered in, for example, lithium-thionyl chloride cells.

It is known in the art that electrochemical cells having an anode of lithium or other Group I metal have high energy densities, high voltages, wide temperature operating ranges, long shelf-life and relatively low cost.

In such cells, the type now commonly referred to as the "liquid cathode" cell are of particular interest. These cells are described, for example in U.S. Patent No. 3,926,669 and in British Patent No. 1,409,307. In accordance with the teachings of the aforementioned patents, the electrolyte, which is also the cathode, comprises an oxyhalide, for example thionyl chloride.

One attractive system is provided through the use of thionyl chloride, a solute of lithium aluminum tetrachloride,

0130505

-2-

a lithium anode and a cathode current collector, which may be for example compressed carbon black. Despite the numerous advantages envisioned for lithium liquid cathode batteries, it has been found that problems occur with these cells. A particular problem has been identified as that of voltage delay particularly occuring when the batteries are stored at elevated temperatures. The voltage delay problem is characterized by two features: to wit, a dip in voltage below a defined cutoff voltage and the time required for the voltage to rise back to the cutoff voltage. The problem is believed to result from passivation of the lithium anode due apparently to reactions between the lithium anode and constituents of the electrolyte.

In accordance with U.S. Patent No. 4,170,693 it is proposed to minimize the voltage delay problem by coating the lithium anode with a cyanoacrylate polymeric coating.

In accordance with U.S. Patent No. 4,296,185 it is proposed to minimize the voltage delay problem by inserting a cyanoacrylate sheet in the cell contiguous to and in physical contact with the anode. It is further taught in U.S. Patent No. 4,296,185 that this sheet should remain intact and contiguous to the anode during cell operation while allowing lithium ions to pass through it.

The invention is directed to an improvement in the reduction of voltage delay of a lithium oxyhalide cell wherein the lithium is exposed in the cell to a liquid cathode, e.g., $SOCl_2$, in which has been dissolved prior to cell assembly a substance from the group of alkyl cyanoacrylates and acrylic and substituted acrylic ester polymers. No specific anode treatments are necessary nor are any films contiguous to said anode required.

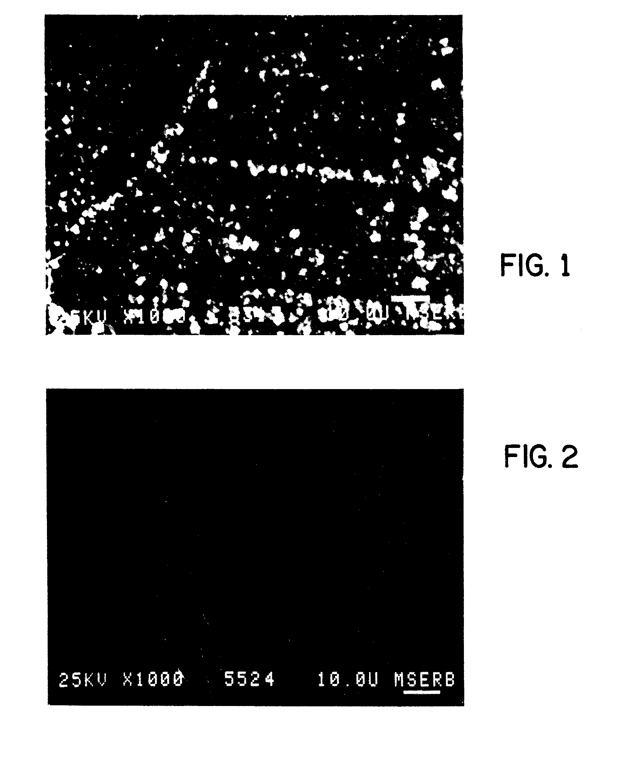

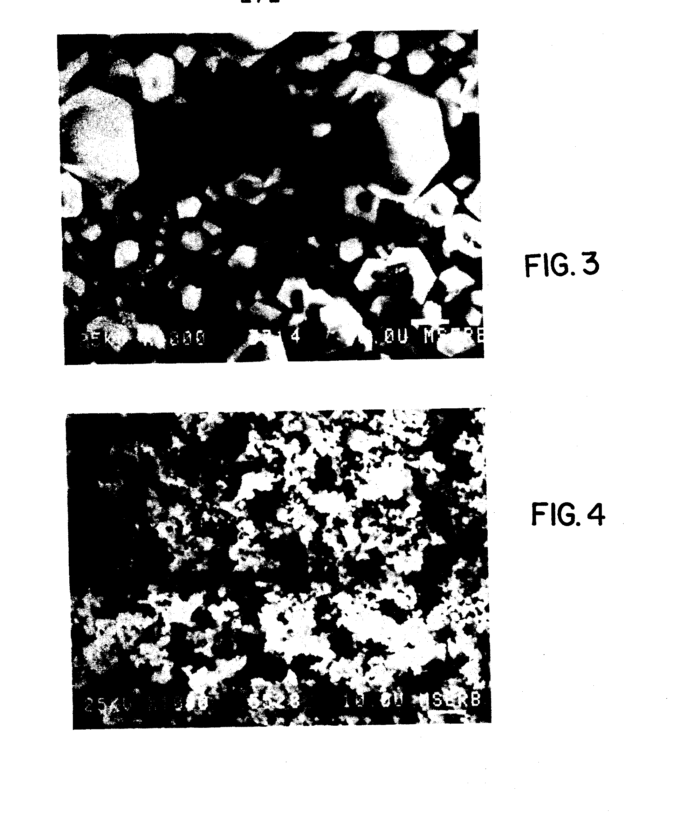

Figures 1 to 4 are scanning electron photomicrographs showing surfaces of lithium exposed to thionyl chloride - $LiAlCl_4$ alone (Figures 1 and 3) at room temperature and 71°C respectively and thionyl chloride - $LiAlCl_4$ to which has been added ethyl 2 cyanoacrylate (Figures 2 and 4) at room temperature and 71°C respectively.

In accordance with the invention, the voltage delay of a lithium or a lithium alloy liquid oxyhalide cell is minimized by dissolving in the liquid cathode a cyanoacrylate ester or an acrylic ester polymer prior to adding the solution to the cell.

The passivation effect on lithium electrodes appears to result from film formation of lithium halide on the lithium surface. The conditions leading to control of the film are obscure, but it is postulated that weaker films have a lesser tendency to passivate. In order to show to what extent a film forms on a lithium electrode in contact with thionyl chloride electrolytes/cathodes, a typical electrolyte was made up with 1.6M $LiAlCl_4$ dissolved in $SOCl_2$. To a portion of this solution was added ethyl 2 cyanoacrylate in an amount of 61.5 mg per ml of electrolyte. It is presumed, although not known with certainty, that the ethyl 2 cyanoacrylate reacts in some way with the electrolyte to form an acrylic polymer not fully substituted with nitrile groups. Lithium coupons were stored in these solutions for five days, one set at room temperature and the other set at 71°C.

At room temperature, as shown in Figure 1, the electrolyte without polymer produced a dense passivating film of lithium chloride on the metallic lithium whereas electroylte containing the polymer produced practically no passivating film as shown in Figure 2. At 71°C, the polymer-free electrolyte produced a thick, massive passivating film as shown in Figure 3, whereas the polymer-containing electrolyte produced a very open and loose film of lithium chloride on the metallic lithium.

Alkyl 2-cyanoacrylates are unsaturated monomeric esters which polymerize readily at room temperature usually without deliberately added catalysts and which are used as adhesives. Polymerization is usually initiated by moisture present in the atmosphere. The compounds are described in the Encyclopedia of Polymer Science and Technology, John Wiley and Sons, 1964, Vol. 1, at pages 337 to 342. The acrylic ester polymers are described in the same volume on pages 246 to 328.

The anodic embodiments of the invention as depicted in Figures 2 and 4 are best provided by including appropriate polymer in the cathode/electrolyte at the time of cell closure. If for some reason this preferred procedure is impractical, a body of acrylic polymer can be provided on the interior of a cell component or components remote from and not contiguous with the anode but in contact with the cathode/electrolyte and be permitted to dissolve in the cathode/electrolyte subsequent to cell closure. This latter alternative is not considered ideal because undesirable polymer concentration gradients may very well persist in the liquid cathode/electrolyte for considerable periods of time.

Although the present invention has been described in conjunction with preferred embodiments, it is to be understood that modifications and variations may be resorted to without departing from the spirit and scope of the invention, as those skilled in the art will readily understand. Such modifications and variations are considered to be within the purview and scope of the invention and appended claims.

RAYOVAC CORPORATION
EP- 58 382

-6-

Patentanwälte
Wuesthoff - v. Pechmann
Behrens - Goetz
Schweigerstraße 2
8000 München 90

CLAIMS:

1. The method for reducing passivation of a lithium or lithium alloy electrode used in a cell having a thionyl chloride liquid cathode which comprises dissolving in the liquid cathode prior to cell assembly, a substance from the group of alkyl-2-cyanoacrylates and acrylic and substituted acrylic ester polymers.

2. A method as in claim 1 wherein an alkyl-2-cyanoacrylate is dissolved in the cathode.

3. A method as in claim 2 wherein ethyl-2-cyanoacrylate is dissolved in the cathode.

FIG. 1

FIG. 2

25KV X1000    5524    10.0U MSERB

FIG. 3

FIG. 4

**European Patent Office**

**EUROPEAN SEARCH REPORT**

Application number

EP 84107199.6

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | US - A - 4 351 888 (DAMPIER et al.) <br> * Claims * <br> -- | 1 | H 01 M 6/14 <br> H 01 M 4/40 |
| A,D | US - A - 4 296 185 (CATANZARITE) <br> * Abstract; examples * <br> -- | 1-3 | |
| A,D | US - A - 4 170 693 (CATANZARITE) <br> * Claims 13-15 * <br> ---- | 1-3 | |

**TECHNICAL FIELDS SEARCHED (Int. Cl. ³)**

H 01 M

The present search report has been drawn up for all claims

| Place of search | Date of completion of the search | Examiner |
|---|---|---|
| VIENNA | 28-09-1984 | LUX |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82